# EUROPÄISCHE PATENTANMELDUNG

(11) **EP 4 389 505 A1**
(43) Veröffentlichungstag der Anmeldung: **26.06.2024**
(21) Anmeldenummer: 23217343.5
(22) Anmeldetag: 15.12.2023
(51) Int. Cl.: B60L 53/30, G09F 13/04, G09F 23/00, G09F 23/06

(54) **LADESTATION**

(30) Priorität: 22.12.2022 DE 102022134646
(71) Anmelder: ads-tec Energy GmbH, 72622 Nürtingen (DE)
(72) Erfinder: SPEIDEL, Thomas, 71706 Markgröningen (DE)
(74) Vertreter: Kordel, Mattias

(57) **Zusammenfassung**

Die Erfindung betrifft eine Ladestation (1), insbesondere für Elektrofahrzeuge, wobei die Ladestation (1) einen Schaubereich (3) aufweist, der eingerichtet ist, um mindestens ein Druckerzeugnis (5) derart aufzunehmen, dass ein Nutzer der Ladestation (1) das mindestens eine Druckerzeugnis (5) von außerhalb der Ladestation (1) betrachten kann.

## Beschreibung

Die Erfindung betrifft eine Ladestation.

Ladestationen, insbesondere für Elektrofahrzeuge, sind bekannt. Um zum einen Nutzer einer Ladestation während der zumindest teilweise nicht ganz unerheblichen Ladezeit zu unterhalten, zum anderen Informationen für die Nutzer bereitzustellen sowie gegebenenfalls Zusatznutzen für den Betreiber zu generieren, ist vorgeschlagen worden, solche Ladestationen mit Bildschirmen auszustatten, auf denen dynamisch Inhalte, sei es in Form von wechselnden Standbildern oder bewegten Bildern, insbesondere Filme oder Videos, angezeigt werden können. Solche Bildschirme sind allerdings im Betrieb energieintensiv und teuer in der Anschaffung. Es besteht daher Bedarf an einer einfacheren Ladestation, die insbesondere bezüglich der Anschaffungs- und Betriebskosten günstiger ist.

Der Erfindung liegt daher die Aufgabe zugrunde, eine Ladestation zu schaffen, bei der die genannten Nachteile zumindest reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem eine Ladestation, insbesondere für Elektrofahrzeuge, geschaffen wird, wobei die Ladestation einen Schaubereich aufweist, der eingerichtet ist, um mindestens ein Druckerzeugnis derart aufzunehmen, dass ein Nutzer der Ladestation das mindestens eine Druckerzeugnis von außerhalb der Ladestation betrachten kann. Vorteilhaft ist die Ladestation einfach aufgebaut, daher günstig in der Anschaffung, und energiesparend im Betrieb, insbesondere da das Anzeigen des Druckerzeugnisses keine oder zumindest keine komplexe elektronische Vorrichtung erfordert.

Als Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet. Insbesondere weist die Ladestation mindestens einen Ladepunkt, insbesondere genau einen Ladepunkt oder genau zwei Ladepunkte, auf.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet.

Der Schaubereich ist insbesondere als Schaukasten ausgebildet. Unter einem Schaukasten wird im Kontext der vorliegenden technischen Lehre insbesondere eine kastenförmige, insbesondere allseitig von Wandungen umfasste Aufnahme verstanden, in der ein zu präsentierendes Objekt, hier das mindestens eine Druckerzeugnis, aufgenommen, aufbewahrt und einem Betrachter präsentiert werden kann. Dabei ist zumindest eine Wandung der Aufnahme zumindest bereichsweise transparent oder durchsichtig, sodass das Objekt von außerhalb des Schaukastens betrachtet werden kann.

Gemäß einer Weiterbildung der Erfindung ist vorgesehen, dass der Schaubereich mindestens ein Befestigungselement zur Befestigung des mindestens einen Druckerzeugnisses aufweist. Vorteilhaft ist es auf diese Weise möglich, dass Druckerzeugnis sicher und positionsstabil in dem Schaubereich aufzubewahren.

Gemäß einer Weiterbildung der Erfindung ist vorgesehen, dass der Schaubereich in die Ladestation, insbesondere in ein Gehäuse der Ladestation, integriert ist. Insbesondere auf diese Weise wird eine kompakte und zugleich informative Ladestation bereitgestellt, die aus sich heraus quasi nach Art einer Litfaßsäule die Präsentation von Druckerzeugnissen ermöglicht.

Gemäß einer Weiterbildung der Erfindung ist vorgesehen, dass der Schaubereich in ein Türelement der Ladestation integriert ist. Vorteilhaft ist auf diese Weise der Schaubereich einfach zugänglich, insbesondere durch Öffnen des Türelements, sodass das Druckerzeugnis in einfacher Weise in den Schaubereich eingebracht, aus dem Schaubereich entnommen, insbesondere gegen ein anderes Druckerzeugnis ausgetauscht werden kann. Weiter bedarf es keines separaten Tür- oder Klappenelements zum Öffnen des Schaubereichs, sondern ein ohnehin vorhandenes Türelement der Ladestation, welches beispielsweise zu Wartungs- und Reparaturzwecken öffenbar ist, kann für den Schaubereich genutzt werden.

In einer Ausführungsform ist der Schaubereich, insbesondere der Schaukasten, derart in das Türelement integriert, dass er vollständig an dem Türelement angeordnet und gemeinsam mit dem Türelement relativ zu einem restlichen Gehäuse der Ladestation verlagerbar, insbesondere um eine Scharnierachse schwenkbar ist. Insbesondere ist der Schaubereich - insbesondere ausschließlich - von einer nur im geöffneten Zustand des Türelements zugänglichen Rückseite des Türelements her zugänglich, insbesondere um das mindestens eine Druckerzeugnis in den Schaubereich einzubringen, aus dem Schaubereich zu entnehmen oder gegen ein anderes Druckerzeugnis zu tauschen. Vorteilhaft haben in dieser Ausgestaltung nur Personen Zugang zu dem Schaubereich, die auch berechtigt sind, das Türelement der Ladestation zu öffnen.

In einer Ausführungsform übergreift der Schaubereich, insbesondere ein transparenter Bereich einer Wandung des Schaukastens, einen Großteil einer Fläche des Türelements, insbesondere nahezu die gesamte Fläche des Türelements. Insbesondere kann er die Fläche des Türelements bis auf schmale Randbereiche übergreifen. Insbesondere nimmt der Schaubereich, insbesondere der transparente Bereich der Wandung des Schaukasten, mindestens 75%, vorzugsweise mindestens 80%, vorzugsweise mindestens 85%, besonders bevorzugt mindestens 89%, der Fläche des Türelements ein.

In einer Ausführungsform bleibt mindestens ein Randbereich des Türelements von dem Schaubereich frei, wobei der Randbereich insbesondere genutzt werden kann, um dort ein Logo oder Markenzeichen eines Betreibers der Ladestation anzuordnen. Das Logo kann dauerhaft auf den Randbereich aufgedruckt oder aufgeklebt, in den Randbereich eingeprägt, eingraviert oder in anderer Weise dort angeordnet sein. Es ist aber auch möglich, dass der Randbereich eine insbesondere durch eine transparente Abdeckung geschützte Logo-Aufnahme aufweist, in der das Logo, beispielsweise als ein weiteres Druckerzeugnis, aufgenommen ist. Es ist auch möglich, dass in dem Randbereich ein Display zur dynamischen Anzeige des Logos integriert ist. Weiter ist es möglich, dass in dem Randbereich eine Randbereich-Beleuchtungsvorrichtung angeordnet ist, mittels der das Logo beleuchtet, insbesondere seitlich angeleuchtet, oder hinterleuchtet oder durchleuchtet werden kann. Das Logo kann insbesondere oberhalb, aber auch seitlich oder unterhalb des Schaubereichs angeordnet werden.

Gemäß einer Weiterbildung der Erfindung ist vorgesehen, dass der Schaubereich derart öffenbar ausgestaltet ist, dass ein in dem Schaubereich angeordnetes Druckerzeugnis entfernt und gegen ein anderes Druckerzeugnis ausgetauscht werden kann. Hierdurch kann vorteilhaft einerseits Druckerzeugnis sicher und geschützt aufbewahrt und andererseits einfach hinzugefügt, entfernt oder ausgetauscht werden, insbesondere durch Öffnen des Türelements, wenn der Schaubereich in das Türelements integriert ist. Insbesondere ist der Schaubereich auf einer im geschlossenen Zustand des Türelements unzugänglichen Rückseite des Türelements öffenbar. Der Schaubereich kann dann nur geöffnet werden, wenn zuvor das Türelement geöffnet wurde, das heißt im geöffneten Zustand des Türelements.

In einer Ausführungsform kann der Schaubereich, insbesondere das Türelement, verschlossen, insbesondere verriegelt werden. Hierdurch kann vorteilhaft ein unerwünschtes Entfernen des mindestens einen Druckerzeugnisses verhindert werden.

Gemäß einer Weiterbildung der Erfindung ist vorgesehen, dass der Schaubereich einen Anordnungsraum zur Anordnung des mindestens einen Druckerzeugnisses sowie - insbesondere von einem Betrachter aus gesehen - vor dem Anordnungsraum ein transparentes Schutzelement aufweist. Vorteilhaft kann auf diese Weise das mindestens eine Druckerzeugnis sicher in dem Anordnungsraum aufbewahrt werden, wobei es durch das transparente Schutzelement einerseits geschützt ist und andererseits betrachtet werden kann.

In einer Ausführungsform ist das transparente Schutzelement als Glasplatte oder als Kunststoffplatte, insbesondere Plexiglasplatte, ausgebildet.

In einer Ausführungsform sind der Anordnungsraum und das transparente Schutzelement in das Türelement der Ladestation integriert. Insbesondere weist das Türelement den Anordnungsraum und das transparente Schutzelement auf.

Insbesondere bilden der Anordnungsraum und das transparente Schutzelement gemeinsam den Schaukasten.

Gemäß einer Weiterbildung der Erfindung ist vorgesehen, dass die Ladestation eine Leuchtvorrichtung aufweist, die angeordnet und eingerichtet ist, um den Schaubereich, insbesondere das mindestens eine Druckerzeugnis, zumindest bereichsweise zu beleuchten. Auf diese Weise kann das Druckerzeugnis vorteilhaft hervorgehoben, in seiner ästhetischen Wirkung verbessert, oder deutlicher sichtbar sowie gegebenenfalls besser lesbar ausgestellt werden.

In einer Ausführungsform ist die Leuchtvorrichtung angeordnet und eingerichtet, um das Druckerzeugnis seitlich, das heißt insbesondere von mindestens einer Seite, insbesondere von mindestens zwei einander gegenüberliegenden Seiten, insbesondere beidseitig, oder von mindestens drei Seiten, oder allseitig, zu beleuchten.

In einer anderen Ausführungsform ist die Leuchtvorrichtung angeordnet und eingerichtet, um das Druckerzeugnis zu durchleuchten oder zu hinterleuchten.

In einer weiteren Ausführungsform weist die Ladestation eine erste Leuchtvorrichtung auf, die angeordnet und eingerichtet ist, um das Druckerzeugnis seitlich zu beleuchten, wobei die Ladestation außerdem eine zweite Leuchtvorrichtung aufweist, die angeordnet und eingerichtet ist, um das Druckerzeugnis zu durchleuchten oder zu hinterleuchten.

Die Leuchtvorrichtung, insbesondere die erste Leuchtvorrichtung und/oder die zweite Leuchtvorrichtung, kann ein einzelnes, insbesondere lang gestrecktes Leuchtelement aufweisen, beispielsweise eine Leuchtstoffröhre, oder sie kann eine Mehrzahl von Leuchtelementen umfassen, die geeignet angeordnet sind zur insbesondere großflächigen Beleuchtung des Druckerzeugnisses. Insbesondere kann die Leuchtvorrichtung eine Mehrzahl an Leuchtdioden als die Mehrzahl von Leuchtelementen aufweisen.

In einer Ausführungsform ist mindestens ein Leuchtelement der Leuchtvorrichtung derart eingerichtet, dass eine Farbe des von dem Leuchtelement emittierten Lichts gewechselt werden kann. Das Leuchtelement ist somit insbesondere als Farbwechsel-Leuchtelement ausgebildet. Insbesondere kann die Leuchtvorrichtung eine Mehrzahl an Farbwechsel-Leuchtelementen aufweisen, wobei die die Farben der Farbwechsel-Leuchtelemente individuell, das heißt separat adressierbar sein, oder kollektiv, das heißt für alle Farbwechsel-Leuchtelement gemeinsam und gleichartig, geändert werden können.

Gemäß einer Weiterbildung der Erfindung ist vorgesehen, dass der Schaubereich eingerichtet ist, um als das mindestens eine Druckerzeugnis ein Poster oder Plakat aufzunehmen. Dies stellt eine ebenso einfache wie effektive Ausgestaltung des Schaubereichs dar. Die Ladestation ist dabei hochgradig attraktiv insbesondere für die Bereitstellung von Poster- oder Plakat-Werbung.

Gemäß einer Weiterbildung der Erfindung ist vorgesehen, dass die Ladestation eine Ladeseite mit wenigstens einem Ladepunkt aufweist, wobei der Schaubereich seitlich von der Ladeseite angeordnet, insbesondere senkrecht zu der Ladeseite orientiert ist. Vorteilhaft werden auf diese Weise eine technische Zugänglichkeit der Ladestation für Nutzer einerseits und Information sowie Unterhaltung der Nutzer andererseits räumlich an der Ladestation voneinander getrennt, sodass Nutzer gezielt unterhalten werden können, dabei aber nicht von der technischen Bedienung der Ladestation abgelenkt werden. Zugleich steht ein größerer Bereich der Ladestation für den Schaubereich zur Verfügung, da dieser nicht räumlich mit dem wenigstens einen Ladepunkt konkurriert.

In einer Ausführungsform weist die Ladestation an der Ladeseite zwei Ladepunkte auf.

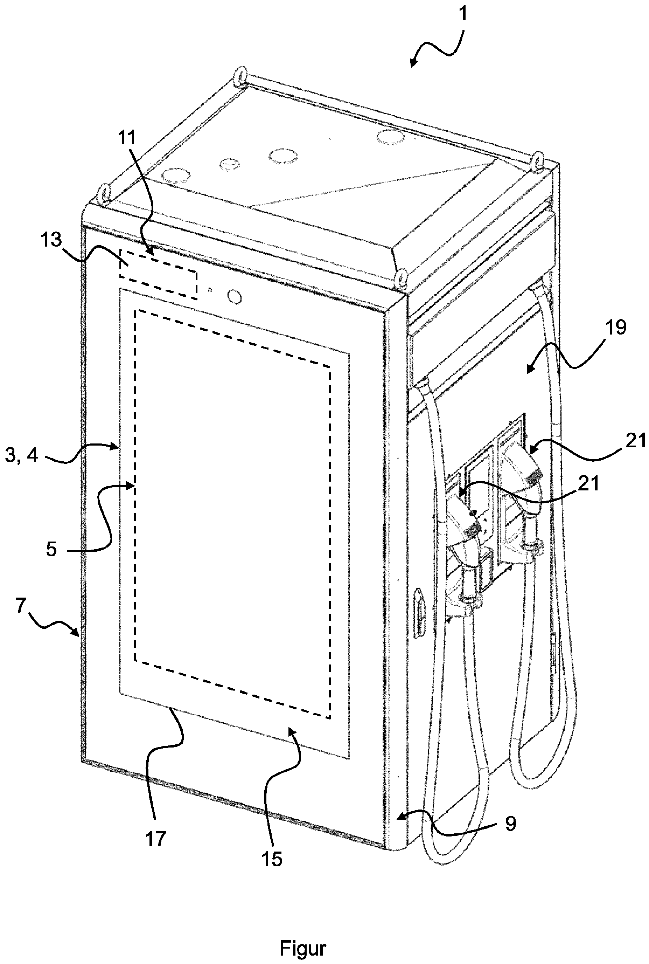

Die Erfindung wird im Folgenden anhand der Zeichnung näher beschrieben. Dabei zeigt die einzige
- Figur: eine schematische Darstellung eines Ausführungsbeispiels einer Ladestation.

Die einzige Fig. zeigt eine schematische Darstellung eines Ausführungsbeispiels einer Ladestation 1, die insbesondere als Ladestation 1 für Elektrofahrzeuge ausgebildet ist.

Die Ladestation 1 weist einen Schaubereich 3 auf, der eingerichtet ist, um mindestens ein Druckerzeugnis 5 derart aufzunehmen, dass ein Nutzer der Ladestation 1 das mindestens eine Druckerzeugnis 5 von außerhalb der Ladestation 1 betrachten kann. Die Ladestation 1 ist somit insbesondere einfach aufgebaut, daher günstig in der Anschaffung, und energiesparend im Betrieb.

Der Schaubereich 3 weist bevorzugt mindestens ein nicht eigens dargestelltes Befestigungselement zur Befestigung des mindestens einen Druckerzeugnisses 5 auf.

Vorzugsweise ist der Schaubereich 3 in die Ladestation 1, insbesondere in ein Gehäuse 7 der Ladestation 1, integriert.

Insbesondere ist der Schaubereich 3 in ein Türelement 9 der Ladestation 1 integriert. Der Schaubereich 3 ist vorzugsweise als in das Türelement 9 integrierter Schaukasten 4 ausgebildet.

Vorzugsweise bleibt ein Randbereich 11 des Türelements 9 von dem Schaubereich 3 frei, wobei in dem Randbereich 11 ein Logo 13 eines Betreibers der Ladestation 1 angeordnet werden kann.

Der Schaubereich 3 ist vorzugsweise derart öffenbar ausgestaltet, insbesondere durch oder nach Öffnen des Türelements 9, dass das in dem Schaubereich 3 angeordnete Druckerzeugnis 5 entfernt und gegen ein anderes Druckerzeugnis 5 ausgetauscht werden kann.

Vorzugsweise weist der Schaubereich 3 einen Anordnungsraum 15 zur Anordnung des mindestens einen Druckerzeugnisses 5 sowie ein - insbesondere von einem Betrachter aus gesehen - vor dem Anordnungsraum 15 angeordnetes, transparentes Schutzelement 17 auf, das insbesondere als Glasplatte oder als Kunststoffplatte, insbesondere Plexiglasplatte, ausgebildet sein kann. Bevorzugt sind der Anordnungsraum 15 und das transparente Schutzelement 17 in das Türelement 9 integriert. Bevorzugt bilden der Anordnungsraum 15 und das transparente Schutzelement 17 gemeinsam den Schaukasten 4.

Vorzugsweise weist die Ladestation 1 eine nicht dargestellte Leuchtvorrichtung auf, die angeordnet und eingerichtet ist, um den Schaubereich 3, insbesondere das mindestens eine Druckerzeugnis 5, zumindest bereichsweise zu beleuchten. Die Leuchtvorrichtung ist bevorzugt angeordnet und eingerichtet, um das Druckerzeugnis 5 seitlich, das heißt insbesondere von mindestens einer Seite, insbesondere von mindestens zwei einander gegenüberliegenden Seiten - insbesondere von rechts und links, oder von oben und unten -, insbesondere beidseitig, oder von mindestens drei Seiten, oder allseitig, zu beleuchten. Alternativ oder zusätzlich ist die Leuchtvorrichtung angeordnet und eingerichtet, um das Druckerzeugnis 5 zu durchleuchten oder zu hinterleuchten.

Der Schaubereich 3 ist bevorzugt eingerichtet, um als das mindestens eine Druckerzeugnis 5 ein Poster oder Plakat aufzunehmen.

Insbesondere weist die Ladestation 1 eine Ladeseite 19 mit wenigstens einem Ladepunkt 21 auf, wobei der Schaubereich 3 seitlich von der Ladeseite 19, insbesondere senkrecht zu der Ladeseite 19 angeordnet ist. Bei dem in der Figur dargestellten Ausführungsbeispiel weist die Ladestation 1 an der Ladeseite 19 zwei Ladepunkte 21 auf.

## Patentansprüche

1. Ladestation (1), insbesondere für Elektrofahrzeuge, wobei die Ladestation (1) einen Schaubereich (3) aufweist, der eingerichtet ist, um mindestens ein Druckerzeugnis (5) derart aufzunehmen, dass ein Nutzer der Ladestation (1) das mindestens eine Druckerzeugnis (5) von außerhalb der Ladestation (1) betrachten kann.

2. Ladestation (1) nach Anspruch 1, wobei der Schaubereich (3) mindestens ein Befestigungselement zur Befestigung des mindestens einen Druckerzeugnisses (5) aufweist.

3. Ladestation (1) nach einem der vorhergehenden Ansprüche, wobei der Schaubereich (3) in die Ladestation (1), insbesondere in ein Gehäuse (7) der Ladestation (1), integriert ist.

4. Ladestation (1) nach einem der vorhergehenden Ansprüche, wobei der Schaubereich (3) in ein Türelement (9) der Ladestation (1) integriert ist.

5. Ladestation (1) nach einem der vorhergehenden Ansprüche, wobei der Schaubereich (3) derart öffenbar ausgestaltet ist, dass ein in dem Schaubereich (3) angeordnetes Druckerzeugnis (5) entfernt und gegen ein anderes Druckerzeugnis (5) ausgetauscht werden kann.

6. Ladestation (1) nach einem der vorhergehenden Ansprüche, wobei der Schaubereich (3) einen Anordnungsraum (15) zur Anordnung des mindestens einen Druckerzeugnisses (5) sowie - insbesondere von einem Betrachter aus gesehen - vor dem Anordnungsraum (15) ein transparentes Schutzelement (17) aufweist.

7. Ladestation (1) nach einem der vorhergehenden Ansprüche, mit einer Leuchtvorrichtung, die angeordnet und eingerichtet ist, um den Schaubereich (3), insbesondere das mindestens eine Druckerzeugnis (5), zumindest bereichsweise zu beleuchten, insbesondere seitlich zu beleuchten oder zu hinterleuchten.

8. Ladestation (1) nach einem der vorhergehenden Ansprüche, wobei der Schaubereich (3) eingerichtet ist, um als das mindestens eine Druckerzeugnis (5) ein Poster oder Plakat aufzunehmen.

9. Ladestation (1) nach einem der vorhergehenden Ansprüche, wobei die Ladestation (1) eine Ladeseite (19) mit wenigstens einem Ladepunkt (21) aufweist, und wobei der Schaubereich (3) seitlich von der Ladeseite (19) angeordnet, insbesondere senkrecht zu der Ladeseite (19) orientiert ist.
